# EUROPEAN PATENT APPLICATION

(11) **EP 2 129 106 A1**
(43) Date of publication of application: **02.12.2009**
(21) Application number: 09159660.1
(22) Date of filing: 07.05.2009
(51) Int. Cl.: H04N 5/262

(54) **Method and system for processing video signals**

(30) Priority: 09.05.2008 TW 97117311
(71) Applicant: Nexcom International Co. Ltd., Chung-Ho City, Taipei County (TW)
(72) Inventor: Chan, Yi-Hsin, Chung-Ho City, Taipei County (TW)
(74) Representative: Harrison, Robert John

(57) **Abstract**

A method and system for processing video signals arc applied to a video environment enabling a user to select the contents of a display screen and then processing the pixel of the selected screen contents for presentation to meet the demands of the user.

## Description

### BACKGROUND OF THE INVENTION

### Field of the Invention

The present invention generally relates to a signal process, more particularly to a method and system for processing video signals, which are applied to a video environment enabling a user to select the contents of a display screen and then processing the pixel of the selected screen contents for presentation to meet the demands of the user.

### Description of the Prior Art

The primary video signal processing technologies applied to displays and digital TV include a first time video signal conversion, video scaling and a second time conversion. A video signal received by the interface of a display is converted by the first time conversion to a raw video data format for subsequent image scaling processing. The scaling is to convert the inputted pixel format of the raw data to the native pixel format of the display, that is, to set the pixel format of each inputted signal at the display native level. At last, the raw video data format after being executed the scaling process is then converted by the second conversion so as to fit an image format that the display screen may present to audience. Generally, a conventional graphics system of a computer processes essential format conversion, scaling or other special image processes, such as zooming, mirroring, rotation, etc., before delivering related video signals to a display and presenting the contents of the video signals to audience.

An image scaling (quantification) device includes a video signal processing module and a video data buffer. A first time converter converts the format of inputted video signals to the format of raw video data, and the format of raw video data is transmitted to the video data buffer of the image scaling device. The raw video data stored in the video data buffer is quantified by the video signal processing module in order to satisfy the demands of a display screen with specific pixel format. The quantified raw video data is delivered to a second time converter to be converted into a specified signal format, and then transmitted to the display with the format of specified interface for presentation.

Generally, the image scaling includes line video scalar and panoramic video scalar. The line video scalar processes smooth extension or compression of the raw video data only on those individual horizontal display lines distributed in the vertical direction. In addition, the panoramic video scalar only processes reproduction or deletion of continuous horizontal display lines in order to meet the format of specified fixed pixel of the panoramic video presented on the display screen. The panoramic video scalar integrates the smooth extension or compression of the raw video data in both horizontal and vertical directions according to the principle of two-dimensional image processing technology, and that is a higher level image processing technology.

Since a larger video data buffer is required, it comes at a higher cost for the panoramic video scalar demand. The line video scalar needs a line video buffer with less memory capacity, but the panoramic video scalar needs a screen video data buffer with more memory capacity. Further, seeing that the panoramic video scalar must processes extension and/or compression of video signals horizontally and vertically, therefore, the video signal processing module of the panoramic video scalar is more efficiently functioned with more complicated design comparing with the video signal processing module of the line video scalar.

Except for the video signal channel, the display interface usually has a DDC (Display-Data-Channel) and other SCIs (Serial Communication Interface). The display system uses the DDC or other SCIs to have the abilities of the retrieves and identifications of displays or setting up the operation models, characteristics, etc. of displays.

As mentioned above for the video scaling device with an embedded fixed display mode of the prior arts, the video scaling device applied in the aspect of line video scalar or panoramic video scalar can only and automatically proceed the extension and/or compression of the whole video signals of the full screen of a display based on fixed width, height, pixel, and ratio of an embedded screen, and present the state on the display. However, a user may not be able to select a partial or a full display screen for other kinds of video signal processes excepting scaling, that is, in addition to the embedded fixed display mode, other functions such as the algorithm of real-time image and video treatment can not be processed. Hence, in addition to the embedded fixed display mode, to find a system and method enabling a user to select a partial or a full screen for processing video signal treatments of the partial or full screen based on the demands of the user, is a very important issue to the persons who are skilled in the art.

### SUMMARY OF THE INVENTION

The primary objective of the present invention is to provide a method and system for processing video signals, which is applied to a video environment, enabling a user to select the contents of a partial screen or a full screen shown on a display and processing the video signals of the contents for presentation to meet the demands of the user.

Another objective of the present invention is to provide the method and system for processing video signals, which enables a user to select a partial screen or a full screen, processes video signal and enables the state to be presented on a display, that is, in addition to the embedded fixed display mode performed, the video scaling process and the real-time video algorithm of real-time image and video treatment can be functioned.

Another objective of the present invention is to provide the method and system for processing video signals, which allows a user to select a partial screen or a full screen and have the options to select some functions such as the algorithms of real-time image and video treatment in addition to the embedded fixed display mode.

In view of the above objectives, a system of the present invention for processing video signals comprises a video signal processing module and a video data buffer.

When video signals are inputted from the outside of the display, the raw video data are converted by a first time converter, and then delivered to the video data buffer; and based on a user's selection on either a partial or a full screen, the raw video data stored in the video data buffer are executed the process of scaling and/or real-time image and video treatment by the video signal processing module, except for the embedded fixed display mode.

Other and further features, advantages, and benefits of the invention will become apparent in the following description taken in conjunction with the following drawings. It is to be understood that the foregoing general description and following detailed description are exemplary and explanatory but are not to be restrictive of the invention. The accompanying drawings are incorporated in and constitute a part of this application and, together with the description, serve to explain the principles of the invention in general terms. Like numerals refer to like parts throughout the disclosure.

### BRIEF DESCRIPTION OF THE DRAWINGS

The objects, spirits, and advantages of the preferred embodiments of the present invention will be readily understood by the accompanying drawings and detailed descriptions, wherein:
Fig. 1 illustrates a schematic view of a video signal processing system structure of the present invention;
Fig. 2 illustrates a schematic view showing the operations of different modules of the video signal processing system of the present invention;
Fig. 3 illustrates a flow chart showing the steps of processing video signals according to the present invention;
Fig. 4 illustrates a flow chart of a first preferred embodiment showing the steps on a selected partial screen by applying the module operations in Fig. 2 to the video signal process in Fig. 3;
Fig. 5 illustrates a schematic view of the present invention showing the partial screen of the display;
Fig. 6 illustrates a schematic view of the present invention showing the full screen amplified from the partial screen in Fig. 5;
Fig. 7 illustrates a flow chart showing detail steps of the scaling and/or real-time image and video treatment in Fig. 4 according to the present invention;
Fig. 8 illustrates a flow chart of a second preferred embodiment showing the operation steps on a selected partial screen by applying the operations in Fig. 2 in Fig. 3;
Fig. 9 illustrates a schematic view of the partial screen of the display according to the present invention;
Fig. 10 illustrates a schematic view of the present invention showing the full mosaic screen after being converted from the partial screen in Fig. 9;
Fig. 11 illustrates a flow chart of the present invention showing detail steps of the scaling and/or real-time image and video treatment in Fig. 8;
Fig. 12 illustrates a flow chart of a third preferred embodiment showing the operation of another selected partial screen by applying the steps in Fig. 2 and Fig. 3 for processing video signals according to the present invention; and
Fig. 13 illustrates a flow chart showing detail steps of the scaling and/or real-time image and video treatment in Fig. 12, according to the present invention.

### DETAILED DESCRIPTION OF THE INVENTION

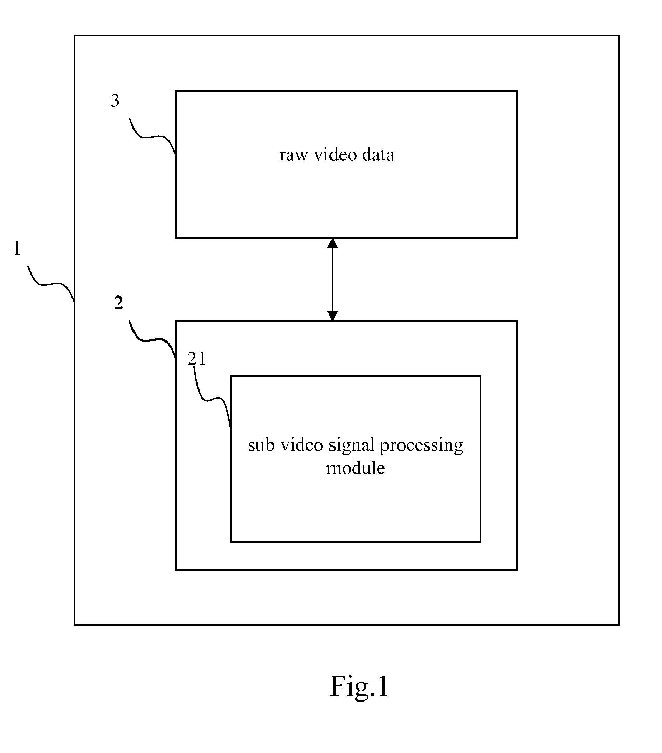

With reference to Fig. 1, a schematic view of a video signal processing system structure of the present invention is shown that a video signal processing system 1 including a video signal processing module 2 and a video data buffer 3.

When a video signal is inputted by a user, the raw video data is stored into the video data buffer 3 and converted by a first time converter. Except for an embedded display mode, the raw video data stored in the video data buffer 3 is executed on the process of scaling and/or real-time image and video treatment by the video signal processing module 2, based on the user selecting a partial or a full screen.

The video signal processing module 2 has a sub video signal processing module 21, which comprises a real-time video algorithm for real-time image and video treatment, and the real-time video algorithm is executed by software and/or firmware, and some other functions, in addition to image zooming, mirroring and rotation, such as mosaic, image-rotating, image-zooming, tint-adjusting, chroma-adjusting, shadow-enhancing, edge-detection, histogram, sharpen, mid-value filter, elispot analysis, etc. are also performed.

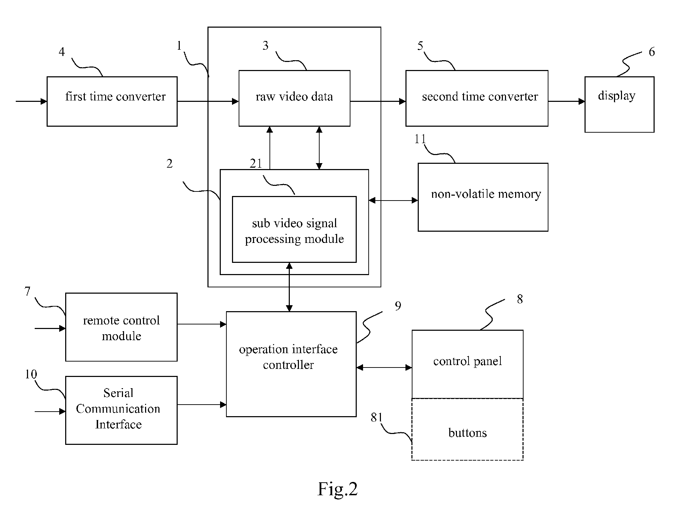

With reference to Fig. 2, a schematic view showing the operations of different modules of the video signal processing system of the present invention is illustrated. A first time converter 4 receives a video signal inputted by a user and converts the signal to raw video data, which is delivered to the video data buffer 3. Except for the embedded display mode, the raw video data stored in the video data buffer 3 are through a format change by the video signal processing module 2 for scaling and/or real-time image and video treatment, based on the user's selection of either a partial or a full screen.

The video signal processing module 2 has a sub video signal processing module 21, which comprises a real-time video algorithm for real-time image and video treatment, and the real-time video algorithm is executed by software and/or firmware, and some other functions, in addition to image zooming, mirroring and rotation, such as mosaic, image-rotating, image-zooming, tint-adjusting, chroma-adjusting, shadow-enhancing, edge-detection, histogram, sharpen, mid-value filter, elispot analysis, etc. are also performed.

The video signal processing module 2 executes scaling processing and/or real-time image and video treatment on the raw video data and sends back the raw video data to the video data buffer 3, and then a second time converter 5 reads the format of the treated raw video data from the video data buffer 3, then the format of the treated raw video data is converted to the format of output video signals, which is transmitted to a display 6. The interface of the display 6 adopts video signal channel, and there are some other interfaces, such as DDC (DC, data channel) or SCIs (Serial Communication Interface).

A remote control module 7 receives remote control signals,, converts the remote control signals to remote control input signals and delivers the remote control input signals to an operation interface controller 9, the operation interface controller 9 converts the remote control input signals to display control signals, and then transmits the display control signals to the video signal processing module 2. Based on the display control signals that are converted from the remote control input signals, the raw video data stored in the video data buffer 3 are executed on the process of scaling and/or real-time image and video treatment by the video signal processing module 2.

A control panel 8 comprises buttons 81 for a user to select, and based on the user's demand the control panel 8 converts the inputted request to input button signals, and then transmits the input button signals to the operation interface controller 9. The operation interface controller 9 receives and converts the input button signals to display control signals, and then transmits the display control signals to the video signal processing module 2. Based on the display control signals converted from the input button signals, the raw video data stored in the video data buffer 3 are under the process of scaling and/or real-time image and video treatment executed by the video signal processing module 2.

A computer system uses the control command of computer system control signals transmitted by DDCs (DC, data channel) or other SCIs 10 (Serial Communication Interface) enabling a user to select a partial screen for special screen treatments, the DDC or SCI 10 converts the received computer system control signals to communication control input signals, and then delivers the communication control input signals to the operation interface controller 9, the operation interface controller 9 receives and converts the communication control input signals to display control signals, then the display control signals are delivered to the video signal processing module 2. Depending on the display control signals converted from the communication control input signals, the raw video data stored in the video data buffer 3 are through a scaling and/or real-time image and video treatment via the video signal processing module 2.

A non-volatile memory 11 is to store all programs of the video signal processing system 1 for scaling and/or real-time image and video treatment, data, information, etc.

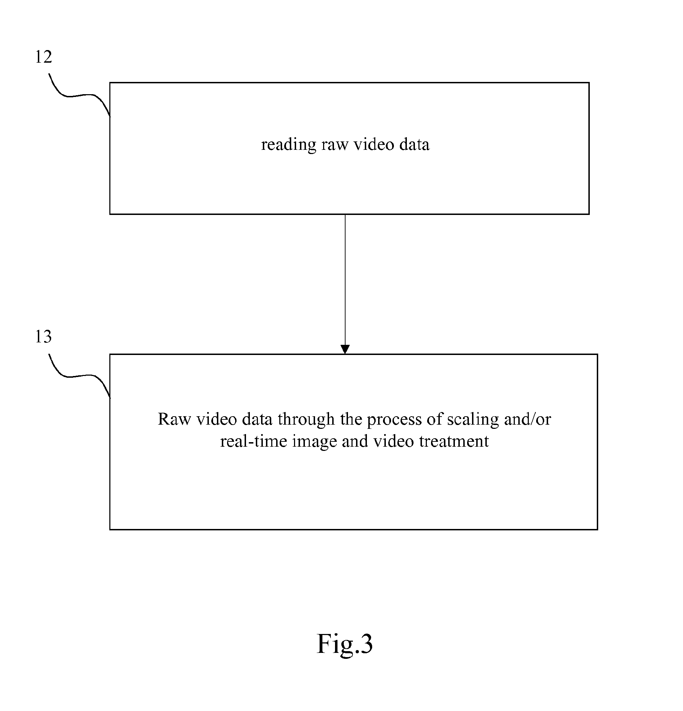

Fig. 3 illustrates a flow chart of the method for processing video signals of the present invention. The method includes the steps: (S12) the video signal processing module 2 reads raw video data that is stored in the video data buffer 3, the raw video data is converted by a first time converter while any video signal is inputted from the outside of the displays; and (S 13) depending on a user's selection on either a partial or a full screen, the raw video data stored in the video data buffer 3 is under the process of scaling and/or real-time image and video treatment executed by the video signal processing module 2, wherein the video signal processing module 2 has a sub video signal processing module 21, which has the functions of the real-time video algorithm for the real-time image and video treatment, and the real-time video algorithm is executed by software and/or firmware, in addition to massive zooming, massive mirroring and massive rotating, other functions of the real-time image and video treatment such as mosaic, image-rotating, image-zooming, tint-adjusting, chroma-adjusting, shadow-enhancing, edge-detection, histogram, sharpen, mid-value filter, elispot analysis, etc. can also be performed.

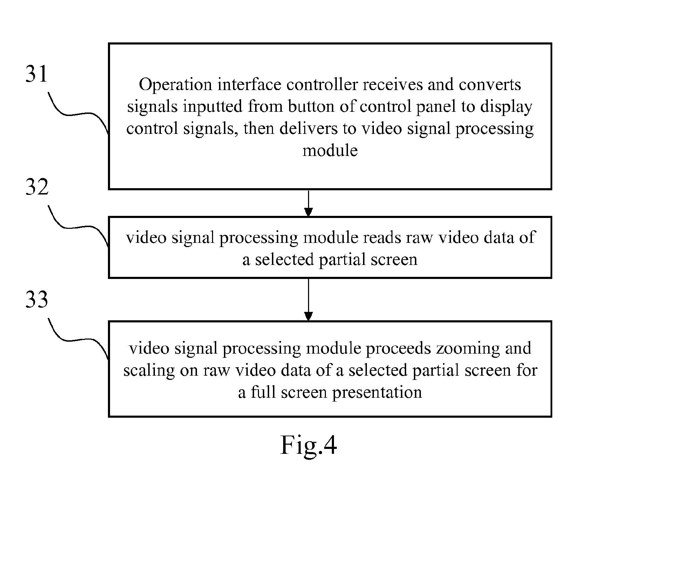

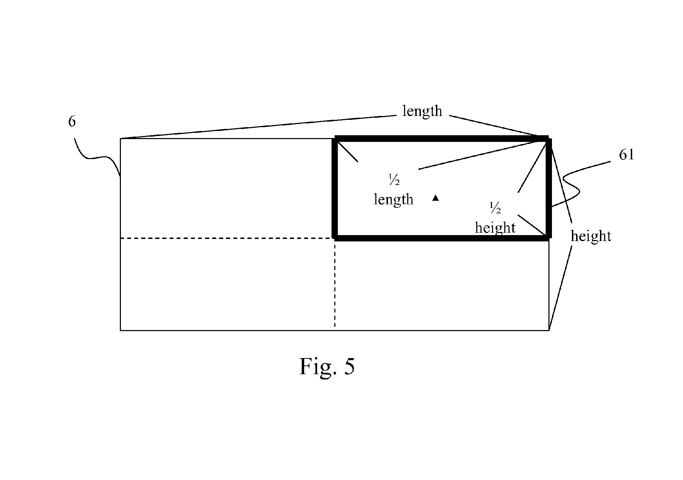

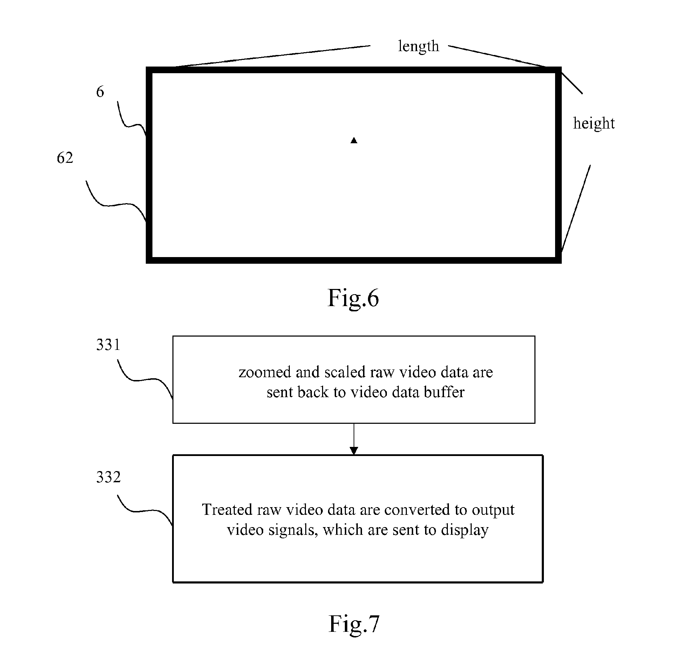

Fig. 4 illustrates a flow chart of a first preferred embodiment of the method for processing video signals of the present invention. As shown that the method applies the operations of different modules of the present invention as shown in Fig. 2 to proceed the steps in Fig. 3, wherein the steps are executed based on a user's selection on a partial screen for special screen treatment. The steps in Fig. 4 include : (S31) the user uses the buttons of the control panel 8 to select a partial screen 61 of the display 6 and requests the demands of zooming the screen as shown in Fig. 5, wherein the size of the partial screen 61 is a quarter of the display 6 on the upper-right corner of the display 6; the user selects the partial screen 61 and uses the buttons of the control panel 8 to amplify the partial screen 61 to become a full screen 62 of the display 6 as shown in Fig. 6, the control panel 8 converts the user's selection to input button signals, and then delivers the input button signals to the operation interface controller 9; the operation interface controller 9 receives the input button signals and converts the signals to display control signals, then the display control signals are delivered to the video signal processing module 2, wherein the meaning of converting the remote control signals to the display control signals is that the user intends to convert the partial screen 61 of the display 6 in Fig. 5 to the full screen 62 in Fig. 6; (S32) depending on the display control signals from the operation interface controller 9, the video signals processing module 2 reads the raw video data stored in the video data buffer 3, the raw video data is converted by the first time converter 4 when video signals are inputted from the outside of the display, wherein the first time converter 4 converts the inputted video signals from the outside of the display to the raw video data; and (S33) depending on the user's selection on either a partial or a full screen, the raw video data stored in the video data buffer 3 is executed through the process of scaling and/or real-time image and video treatment by the video signal processing module 2, thus the partial screen 61 is amplified to the full screen 62 of Fig. 6 for presentation.

Fig. 5 illustrates a schematic view of the partial screen 61 of the display 6 of the present invention. The size of the partial screen 61 is a quarter of the display 6 on the upper-right corner of the display 6.

Fig. 6 illustrates a schematic view of the full screen amplified from the partial screen of Fig. 5.

Fig. 7 illustrates a flow chart of detail steps of the scaling and real-time image and video treatment of Fig. 4 of the present invention. The steps include : (S331) the video signal processing module 2 comprises the sub video signal processing module 21, which has the functions of the real-time video algorithm for the real-time image and video treatment, and the real-time video algorithm is executed by software and/or firmware, in addition to massive zooming, massive mirroring and massive rotating, other functions of the real-time image and video treatment such as mosaic, image-rotating, image-zooming, tint-adjusting, chroma-adjusting, shadow-enhancing, edge-detection, histogram, sharpen, mid-value filter, elispot analysis, etc. can be performed; the video signal processing module 2 transmits the raw video data back to the video data buffer 3 after executing the process of scaling and/or real-time image and video treatment; and (S332) the second time converter 5 reads the format of the treated raw video data from the video data buffer 3, then the format of the treated raw video data is converted to the format of output video signals, which is transmitted to the display 6 so as to present the full screen 62 on the display 6.

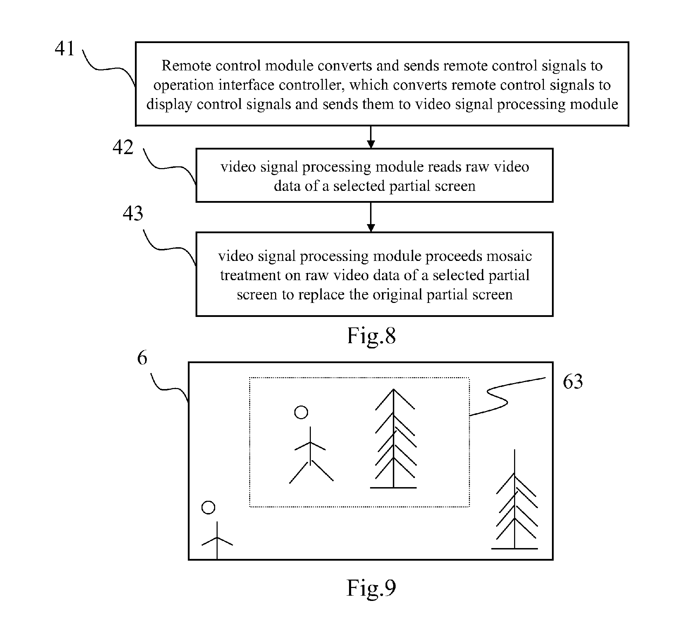

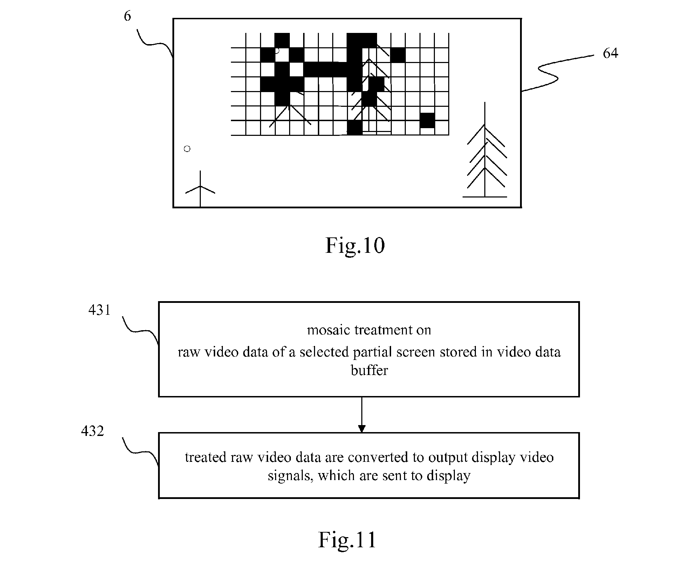

Fig. 8 illustrates a flow chart of a second preferred embodiment of the method for processing video signals of the present invention. As shown that the method applies the operations of different modules of the present invention as shown in Fig. 2 to proceed the steps in Fig. 3, wherein the steps are executed based on a user's selection on a partial screen for special screen treatment. The steps in Fig. 8 include : (S41) the user uses the buttons of the remote controller to select a partial screen and requests the demand of mosaic treatment, a remote control module converts received remote control signals to remote control input signals, and then delivers the remote control input signals to the operation interface controller 9, the operation interface controller 9 receives and converts the remote control input signals to display control signals, then the display control signals are delivered to the video signal processing module 9, wherein the meaning of converting the remote control signals to the display control signals is that the user intends to convert a partial screen 63 of the display 6 in Fig. 9 to a full screen 64 with a partial mosaic screen in Fig. 10; (S42) depending on the display control signals from the operation interface controller 9, the raw video data stored in the video data buffer 3 are executed the process of scaling and/or real-time image and video treatment by the video signal processing module 2, the raw video data are converted by the first time converter 4 while video signals are inputted from the outside of the display, wherein the first time converter 4 converts the inputted video signals from the outside of the display to the raw video data; and (S43) depending on the user's selection on either a partial or a full screen, the raw video data stored in the video data buffer 3 is executed through the process of scaling and/or real-time image and video treatment by the video signal processing module 2, thus the partial screen 63 is amplified to the full screen 64.

Fig. 9 illustrates a schematic view of the partial screen 63 of the display 6.

Fig. 10 illustrates a schematic view of the mosaic screen 64 converted from the partial screen 63 of Fig. 9.

Fig. 11 illustrates a flow chart of detail steps of the scaling and real-time image and video treatment of Fig. 8 of the present invention. The steps include : (S431) the video signal processing module 2 has the sub video signal processing module 21, which has the functions of the real-time video algorithm for the real-time image and video treatment, and the real-time video algorithm is executed by software and/or firmware, in addition to massive zooming, massive mirroring and massive rotating, other functions of the real-time image and video treatment such as mosaic, image-rotating, image-zooming, tint-adjusting, chroma-adjusting, shadow-enhancing, edge-detection, histogram, sharpen, mid-value filter, elispot analysis, etc. are performed, the sub video signal processing module 21 of the video signal processing module 2 converts the video signals of the partial screen 63 to the video signals to the mosaic screen 64, the video signal processing module 2 delivers the raw video data back to the video data buffer 3 after the raw video data are completed the process of scaling and/or real-time image and video treatment; and (S432) the second time converter 5 reads the format of the treated raw video data from the video data buffer 3, then the format of the treated raw video data is converted to the format of output video signals, which is transmitted to the display 6 so as to present the full screen 62 with the mosaic screen 64 on the display 6.

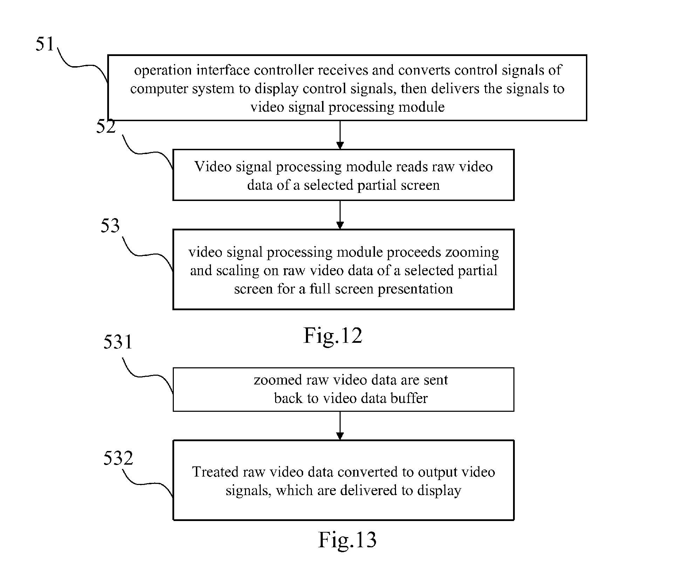

Fig. 12 illustrates a flow chart of a third preferred embodiment of the method for processing video signals of the present invention. As shown that the method applies the operations of different modules of the present invention as shown in Fig. 2 to proceed the steps in Fig. 3, wherein the steps are executed based on a user's selection on a partial screen for special screen treatment. The steps in Fig. 12 include : (S51) a computer system uses the control command of computer system control signals transmitted by DDCs (DC, data channel) or other SCIs (Serial Communication Interface) enabling a user to select the partial screen 61 of the display 6 for zooming the screens as shown in Fig. 5, wherein the size of the partial screen 61 is a quarter of the display 6 on the upper-right corner of the display 6, the control command transmitted by DDCs or other SCIs includes the user's selecting the partial screen 61 and request on amplifying that the partial screen 61 to become the full screen 62 of the display 6 of Fig. 6, the DDCs or other SCIs converts received computer system control signals to communication control input signals, and then delivers the communication control input signals to the operation interface controller 9, the operation interface controller 9 receives and converts the communication control input signals to display control signals, then the display control signals are delivered to the video signal processing module 2, wherein the meaning of converting the communication control signals to the display control signals is that the user intends to convert the partial screen 61 of the display 6 in Fig. 5 to the full screen 62 in Fig. 6; (S52) depending on the display control signals from the operation interface controller 9, the video signal processing module 2 reads the raw video data stored in the video data buffer 3, the raw video data are converted by the first time converter 4 while video signals are inputted from the outside of the display, wherein the first time converter 4 converts the inputted video signals from the outside of the display to the raw video data; and (S53) depending on the control command of the communication control input signals on either the user's selecting a partial or a full screen, the raw video data stored in the video data buffer 3 is executed through the process of scaling and/or real-time image and video treatment by the video signal processing module 2, thus the partial screen 61 is amplified to the full screen 62 of Fig. 6.

Fig. 13 illustrates a flow chart of detail steps of the scaling and real-time image and video treatment of Fig. 8 of the present invention. The steps include : (S531) the video signal processing module 2 comprises the sub video signal processing module 21, which has the functions of the real-time video algorithm for the real-time image and video treatment, and the real-time video algorithm is executed by software and/or firmware, in addition to massive zooming, massive mirroring and massive rotating, the functions of the real-time image and video treatment such as mosaic, image-rotating, image-zooming, tint-adjusting, chroma-adjusting, shadow-enhancing, edge-detection, histogram, sharpen, mid-value filter, elispot analysis, etc. are also performed, the video signal processing module 2 transmits the raw video data back to the video data buffer 3, after the raw video data are completed the process of scaling and/or real-time image and video treatment; and (S532) the second time converter 5 reads the format of the treated raw video data from the video data buffer 3, then the format of the treated raw video data is converted to the format of output video signals, which is transmitted to the display 6 so as to present the full screen 62 on the display 6.

Although this invention has been disclosed and illustrated with reference to particular embodiments of amplifying a partial screen to a full screen and mosaicking the partial screen, the principles involved are susceptible for use in numerous other embodiments that will be apparent to persons skilled in the art. This invention is, therefore, to be limited only as indicated by the scope of the appended claims.

## Claims

1. A method for processing video signals being applied to a video environment and enabling a user to select the contents of a display screen in order to process the video signals of the contents, comprising the steps of:
a video signal processing module, for reading raw video data stored in a video data buffer, the raw video data being converted by a first time converter after video signals being inputted from the outside of the displays; and
depending on a user's screen selection, the raw video data stored in the video data buffer being executed through the process of scaling and/or real-time image and video treatment by the video signal processing module.

2. The method for processing video signals according to claim 1 further comprising the steps of:
the raw video data being sent back to the video data buffer from the video signal processing module after being executed the process of scaling and/or real-time image and video treatment; and
a second time converter reading the format of the treated raw video data from the video data buffer, then converting the format of the treated raw video data to the format of output video signals, which is transmitted to a display.

3. The method for processing video signals according to claim 1 or 2, wherein a display screen selected by the user is a partial screen.

4. The method for processing video signals according to claim 1 or 2, wherein a display screen selected by the user is a full screen.

5. The method for processing video signals according to claim 3 or 4, wherein the video signal processing module comprising the real-time video algorithm for the real-time image and video treatment, and the real-time video algorithm is executed by software and/or firmware.

6. The method for processing video signals according to claim 3, 4 or 5, wherein the functions of the video signal processing module consisting of massive zooming, massive mirroring, massive rotating, image-rotating, image-zooming, tint-adjusting, chroma-adjusting, shadow-enhancing, edge-detection, histogram, sharpen, mid-value filter, and elispot analysis.

7. A method for processing video signals being applied to a video environment and enabling a user to select the contents of a display screen in order to process the video signals of the contents, comprising the steps of:
enabling a user to use the buttons of a control panel to select a partial screen and
request special screen treatments, the control panel converting the inputted request to input button signals, and then delivering the input button signals to an operation interface controller, the operation interface controller receiving and converting the input button signals to display control signals, then the display control signals being delivered to the video signal processing module;
depending on the display control signals from the operation interface controller, the video signals processing module reading raw video data stored in a video data buffer, the raw video data being converted by a first time converter after video signals being inputted from the outside of a display, wherein the first time converter converts the inputted video signals from the outside of the display to the raw video data; and
depending on a user's screen selection, the raw video data stored in the video data buffer being through the process of scaling and/or real-time image and video treatment by the video signal processing module.

8. The method for processing video signals according to claim 7 further comprising the steps of:
after the raw video data being through the process of scaling and/or real-time image and video treatment, the raw video data being sent back to the video data buffer by the video signal processing module; and
a second time converter reading the format of the treated raw video data from the video data buffer, then converting the format of the treated raw video data to the format of output video signals, which is transmitted to a display.

9. A method for processing video signals being applied to a video environment and enabling a user to select the contents of a display screen in order to process the video signals of the contents, comprising the steps of:
enabling a user to use the buttons of a remote controller to select a partial screen and request special screen treatments, a remote control module converting received remote control signals into remote control input signals, and then delivering the remote control input signals to an operation interface controller, the operation interface controller receiving and converting the remote control input signals to display control signals, then the display control signals being delivered to the video signal processing module;
depending on the display control signals from the operation interface controller, the raw video data stored in a video data buffer being through the process of scaling and/or real-time image and video treatment by the video signal processing module, the raw video data being converted by the first time converter after video signals being inputted from the outside of a display, wherein the first time converter converts the inputted video signals from the outside of the display to the raw video data; and
depending on a user's screen selection, the raw video data stored in the video data buffer being through the process of scaling and/or real-time image and video treatment by the video signal processing module.

10. The method for processing video signals according to claim 9 further comprising the steps of:
after the raw video data being through the process of scaling and/or real-time image and video treatment, the raw video data being sent back to the video data buffer by the video signal processing module; and
a second time converter reading the format of the treated raw video data from the video data buffer, then converting the format of the treated raw video data to the format of output video signals, which is transmitted to a display.

11. A method for processing video signals being applied to a video environment and enabling a user to select the contents of a display screen in order to process the video signals of the contents, comprising the steps of:
a computer system using the control command of computer system control signals transmitted by DDCs (DC, data channel) or other SCIs (Serial Communication Interface) enabling a user to select a partial screen for special screen treatments, the DDC or SCI converting the received computer system control signals to communication control input signals, and then delivering the communication control input signals to said operation interface controller, the operation interface controller receiving and converting the communication control input signals to display control signals, then the display control signals being delivered to a video signal processing module;
depending on the display control signals from the operation interface controller, the video signals processing module reading the raw video data stored in said video data buffer, the raw video data being converted by said first time converter after video signals being inputted from the outside of a display, wherein the first time converter converts the inputted video signals from the outside of the display to the raw video data; and
depending on a user's selection on a partial screen, the raw video data stored in the video data buffer being through the process of scaling and/or real-time image and video treatment by the video signal processing module.

12. The method for processing video signals according to claim 11 further comprising the steps of:
after the raw video data being executed the process of scaling and/or real-time image and video treatment , the raw video data being sent back to the video data buffer by the video signal processing module; and
a second time converter reading the format of the treated raw video data from the video data buffer, then the format of the treated raw video data being converted to the format of output video signals, which is transmitted to a display.

13. The method for processing video signals according to claim 7, 8, 9, 10, 11, or 12, wherein the video signal processing module has the functions of the real-time video algorithm for the real-time image and video treatment, and the real-time video algorithm is executed by software and/or firmware.

14. The method for processing video signals according to claim 13, wherein the functions of the video signal processing module consisting of zooming, mirroring, rotating, image-rotating, image-zooming, tint-adjusting, chroma-adjusting, shadow-enhancing, edge-detection, histogram, sharpen, mid-value filter, and elispot analysis.

15. A system for processing video signals being applied to a video environment and enabling a user to select the contents of a display screen in order to process the video signals of the contents, comprising:
a video data buffer, for storing raw video data, the raw video data being converted by a first time converter after video signals being inputted from the outside of the displays; and
a video signal processing module, for processing scaling and/or real-time image and
video treatment on the raw video data stored in the video data buffer, depending on a user's selection on a display.

16. The system for processing video signals according to claim 15, wherein the video signal processing module comprises:
a sub video signal processing module, comprising the functions of the real-time video algorithm for the real-time image and video treatment, and the real-time video algorithm is executed by software and/or firmware.

17. The system for processing video signals according to claim 16, wherein the functions of the sub video signal processing module consisting of massive zooming, massive mirroring, massive rotating, mosaic, image-rotating, image-zooming, tint-adjusting, chroma-adjusting, shadow-enhancing, edge-detection, histogram, sharpen, mid-value filter, and elispot analysis.
